# FASCICULE DE BREVET EUROPEEN

(11) **EP 3 328 665 B1**
(45) Date de publication et mention de la délivrance du brevet: **04.09.2019**
(21) Numéro de dépôt: 16745716.7
(22) Date de dépôt: 29.07.2016
(51) Int. Cl.: B60C 23/04

(54) **SYSTÈME D'ÉVALUATION DE L'ÉTAT D'UN PNEUMATIQUE**
SYSTEM ZUR FESTSTELLUNG DES ZUSTANDS EINES REIFENS
SYSTEM FOR EVALUATING THE STATE OF A TIRE

(30) Priorité: 30.07.2015 FR 1557304
(43) Date de publication de la demande: 06.06.2018
(73) Titulaire: Compagnie Générale des Etablissements Michelin, 63000 Clermont-Ferrand (FR)
(72) Inventeur: LEDOUX, Thomas, 63040 Clermont-Ferrand Cedex 9 (FR); MARTIN, Denis, 63040 Clermont-Ferrand Cedex 9 (FR); PERNOT, Alexandre, 63040 Clermont-Ferrand Cedex 9 (FR); HEREDIA, Guillaume, 63040 Clermont-Ferrand Cedex 9 (FR)
(74) Mandataire: Roussy, Delphine
(86) Numéro de dépôt international: PCT/EP2016/068141
(87) Numéro de publication internationale: WO 2017/017249

(56) Documents cités:
- WO-A2-2012/140367
- Mary Catherine ET AL: "The company's new UHF RFID tag and sensor module can be attached to a truck tire's inside wall without affecting vehicle or tag performance at higher speeds", RFID Journal, 8 janvier 2007 (2007-01-08), pages 1-3, XP055273628, Extrait de l'Internet: URL:http://www.rfidjournal.com/articles/pd f?2950 [extrait le 2016-05-19]
- "Puce électronique dans les pneus. La 1ere manche à Goodyear", LE PNEUMATIQUE, 1 juin 2007 (2007-06-01), XP055273642,

## Description

### DOMAINE DE L'INVENTION

La présente invention est relative à un système d'évaluation de l'état d'un pneumatique, notamment mais non exclusivement l'état d'usure d'un pneumatique.

De manière connue, la bande de roulement d'un bandage pneumatique, qu'il soit destiné à équiper un véhicule de tourisme, poids lourd, Génie Civil ou autre..., est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un bandage pneumatique est neuf, la bande de roulement est à sa hauteur maximale. Cette hauteur initiale peut varier en fonction du type de bandage pneumatique considéré ainsi que de l'usage auquel il est destiné ; à titre d'exemple, les bandages pneumatiques « hiver » ont généralement une profondeur de sculpture supérieure à celle de bandages pneumatiques « été ». Lorsque le bandage pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du bandage pneumatique, telle l'adhérence sur sol mouillé. De plus, les capacités d'évacuation d'eau diminuent fortement lorsque la profondeur des canaux des sculptures diminue.

Il est donc souhaitable de pouvoir suivre l'évolution de l'usure de la bande de roulement d'un bandage pneumatique.

Il est également utile, dans le cadre de gestion de flottes de véhicule, de pouvoir suivre l'évolution d'autres paramètres représentatifs de l'état d'un pneumatique, par exemple une pression du pneumatique.

On connait, du document US 2009/0000370, un système de mesure comprenant un banc de roulement destiné à accueillir le passage d'un véhicule. Le système comprend une source d'énergie qui émet un signal sans fil en direction du pneumatique, et un capteur qui détecte un signal émis en retour par le pneumatique. A partir de ce signal retour, une unité de contrôle détermine la profondeur de la sculpture du pneumatique. Toutefois, on a constaté que ce système nécessite une alimentation constante des différents éléments, et n'offre donc qu'une faible autonomie.

Le document de Mary Catherine et al. : "The company's new UHF RFID tag and sensor module can be attached to the truck tire's inside wall without affecting vehicle or tag performance at higher spedds", RFID journal, 8 janvier 2007, pages 1-3, divulgue un système de lecture de différents RFID de pneumatiques via plusieurs modules d'antennes évaluant ainsi l'état des pneumatiques en question. Cette divulgation est proche du préambule de la revendication 1.

La présente invention vise à remédier à cet inconvénient, en proposant un système autonome d'évaluation de l'état d'un pneumatique. La présente invention vise également à proposer un système facile à installer pour un gestionnaire de flottes, et adaptable à différents types de véhicule et différentes configurations de montage de roues et d'essieux.

### BREVE DESCRIPTION DE L'INVENTION

Ainsi, l'invention concerne un système d'évaluation de l'état d'un pneumatique, le système comprenant au moins un premier et un second modules unitaires d'évaluation de l'état d'un pneumatique,
chaque module unitaire comprenant un boîtier posé au sol, ce boitier contenant au moins un dispositif de détection permettant l'évaluation d'un paramètre du pneumatique lors d'un passage du pneumatique sur ledit boitier et des moyens de transmission de données,
ledit système comprenant en outre
une base de données distante et une passerelle de transmission de données entre les modules unitaires et la base de données, et
des moyens de coopération entre le premier et second module unitaires.

Dans un mode de réalisation préférentiel, les premier et second modules unitaires sont positionnés de manière adjacente. En effet, un tel positionnement permet d'offrir une largeur de module plus importante, et permet ainsi l'évaluation de pneumatiques plus large. Cela permet également d'effectuer l'évaluation de pneumatiques jumelés en un seul passage.

Dans le cadre, il est donc utile de pouvoir déterminer, lorsque deux modules adjacents réalisent deux mesures, si ces mesures correspondent à deux pneumatiques, ou si elles représentent deux évaluations partielles d'un même pneumatique.

A cet effet, dans un mode de réalisation particulier, chaque module unitaire comprend un lecteur de puce RFID, qui permet de détecter un unique, ou plusieurs, identifiants RFID situés sur le véhicule dont les pneumatiques sont évalués ou dans les pneumatiques évalués.

Dans le cas où deux modules effectuent une évaluation partielle d'un même pneumatique, il est utile de pouvoir traiter les informations venant des deux modules et de les combiner pour reconstruire une évaluation complète de l'état du pneumatique.

Ainsi, dans un mode de réalisation particulier, les moyens de coopération comprennent des moyens de synchronisation régulière entre chacun des modules unitaires et la passerelle de transmission de données. Dans un exemple de réalisation, chaque module unitaire transmet à intervalle régulier l'horaire indiqué par leur horloge interne à une passerelle. Ainsi, l'écart entre les horloges de chacun et l'horloge de la passerelle est connu.

Il est ensuite possible de mettre en oeuvre des moyens de recalage temporel installés, par exemple dans la passerelle pour reconstituer l'évaluation de l'état du pneumatique.

Ainsi que précédemment indiqué, un système selon l'invention peut être utilisé pour évaluer différents paramètres d'un pneumatique. Dans un exemple de réalisation particulier, chaque module unitaire comprend au moins un capteur mettant en oeuvre une source de champ magnétique, ces capteurs permettant notamment de réaliser une mesure de l'usure des pneumatiques. On utilise par exemple des capteurs à courants de Foucault ou de capteurs à reluctance variable.

Dans ce cas, et afin d'éviter toute perturbation d'un capteur à l'autre, il est utile de positionner les capteurs de façon telle que la distance entre deux capteurs adjacents est constante, quel que soit le module unitaire dans lequel le capteur est installé.

Dans un mode de réalisation, la base de données distante contient des informations représentatives du positionnement des modules unitaires les uns par rapport aux autres.

Dans un autre mode de réalisation, les moyens de coopération comprennent des moyens de coopération mécaniques.

Dans un autre mode de réalisation encore, les moyens de coopération comprennent des moyens de reconstruction de mesures complète à partir de mesures partielles effectuées sur un même pneumatique.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un exemple de réalisation d'un module unitaire de mesure de l'état d'un pneumatique, mis en oeuvre dans un système selon l'invention,
- les figures 2a, 2b et 3 montrent différentes dispositions de modules unitaires dans un système selon l'invention,
- les figures 4 et 5a à 5d montrent des détails de modules unitaires utilisés dans la configuration de la figure 3,
- les figures 6a à 6c montrent des détails de réalisation d'un module unitaire tel que montré en figure 1, et
- les figures 7 et 8 montrent un système selon l'invention dans lequel les modules unitaires présentent une forme particulière.

### DESCRIPTION DU MEILLEUR MODE DE REALISATION DE L'INVENTION

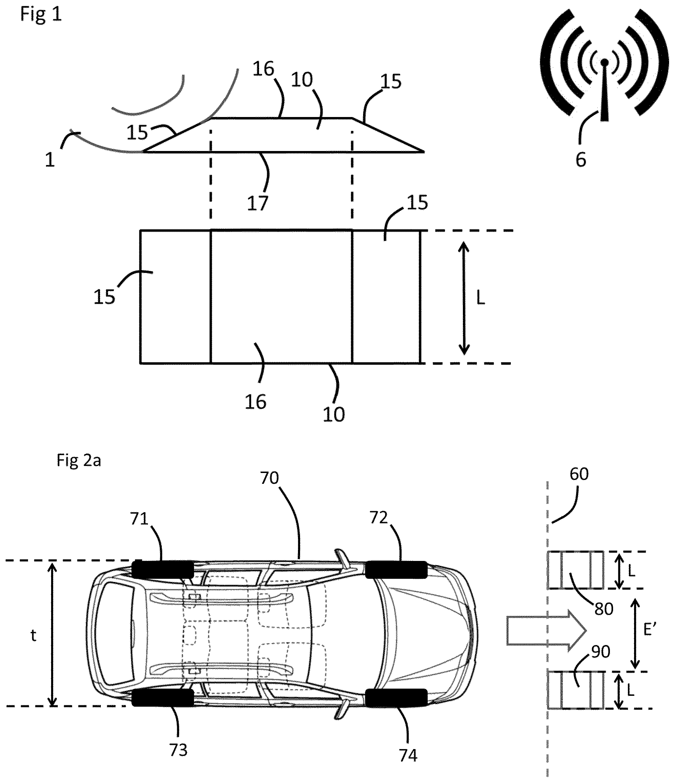

La figure 1 montre un exemple de réalisation d'un module unitaire comprenant un boitier 10 de mesure mis en oeuvre dans un système selon l'invention. Dans la suite de la description, on utilisera indifféremment les termes de boitier ou de module unitaire pour désigner l'élément physique posé au sol.

Le module 10 est constitué de deux rampes d'accès 15 et d'une zone de mesure horizontale 16. Il est conçu de manière à pouvoir être disposé sur un sol plan et fixé sur ce sol, par exemple au moyen de vis.

Le module a des dimensions choisies afin d'être transportable facilement. Ainsi, de manière avantageuse, sa largeur L est inférieure à 2 m. De cette façon elle est aisément manipulable par une personne et peut-être transportée sur une palette.

Le module comprend en outre une électronique interne comprenant un ensemble de fonctionnalités permettant un fonctionnement en autonomie complète. Ainsi le module comprend :
- Sa propre source d'énergie, par exemple sous forme de batteries. Alternativement, il est également possible de la connecter sur le réseau électrique,
- des moyens de mesure de l'état des pneumatiques, par exemple des capteurs de mesure de l'usure ou de la pression des pneumatiques. Dans le cas de capteurs de mesure de l'usure, ces capteurs peuvent utiliser une source de champ magnétique alternative, comme par exemple dans le cas de capteurs à courants de Foucault ou de capteurs à reluctance variable. Alternativement, ces capteurs peuvent également utiliser une source de champ magnétique statique.
- des moyens de transmissions de données, permettant de communiquer avec une passerelle web 6 disposée à proximité,
- des moyens d'identification des pneumatiques et des véhicules, par exemple un lecteur de RFID.
- une horloge, permettant d'associer toute mesure à une date et un horaire de mesure.

Par ailleurs, le module unitaire est muni de moyens de coopération destiné à permettre une association de plusieurs modules unitaires afin de former un système complet d'évaluation de l'état des pneus. Ces moyens de coopération peuvent être mécaniques, pour permettre l'assemblage physique des modules, ou électroniques, pour permettre une reconstitution des mesures effectuées par différents modules.

La passerelle 6 est un relais de communication entre les modules unitaires et une base de données distante. Cette passerelle est donc munie de moyens de réception des informations en provenance des modules et de moyens de transmissions jusqu'à ladite base de données distante.

En outre, la passerelle 6 est également munie de sa propre horloge, permettant de connaitre la date et l'horaire de réception des messages reçus des modules unitaires.

La figure 2a montre un premier exemple de réalisation d'un système de mesure de l'état des pneumatiques selon l'invention.

Dans cet exemple, le système de mesure de l'état des pneumatiques est constitué de deux modules 80 et 90. Ainsi, il est adapté à la mesure d'état de pneumatiques sur véhicules de tourisme.

Il faut noter que l'écartement E' entre les deux modules est choisi de façon à ce que les pneus situés sur le côté gauche d'un véhicule soient mesurés par le module 80, lorsque les pneumatiques situés sur le côté droit du véhicule sont mesurés par le module 90.

Ainsi, lors d'un passage d'un véhicule sur le système montré sur cet exemple, chaque module effectue une évaluation de l'état des pneumatiques situés sur un côté du véhicule. Les données mesurées sont alors transmise à la passerelle 6, afin d'être ultérieurement transmis, périodiquement ou lorsque le pneumatique quitte le système de mesure, à une base de données distance.

Afin d'éviter une transmission simultanée des modules 80 et 90 vers la passerelle, qui pourrait créer des perturbations, voire des échecs, dans l'information transmise, on utilise dans un exemple de réalisation un protocole de transmission d'information appelé « Listen Before Talk ». Dans ce protocole, si le module 80 souhaite transmettre son résultat de mesure, il passe d'abord en mode réception pendant un temps aléatoire, afin de de détecter une éventuelle transmission de message par un autre module. Avantageusement ce temps d'écoute est de l'ordre de la dizaine de millisecondes. Si aucun message n'est en cours de transmission par un autre module, le module 80 envoie le résultat de sa mesure à la passerelle 6. Sinon, le module se met de nouveau en mode réception dans l'attente de pouvoir transmettre ces données

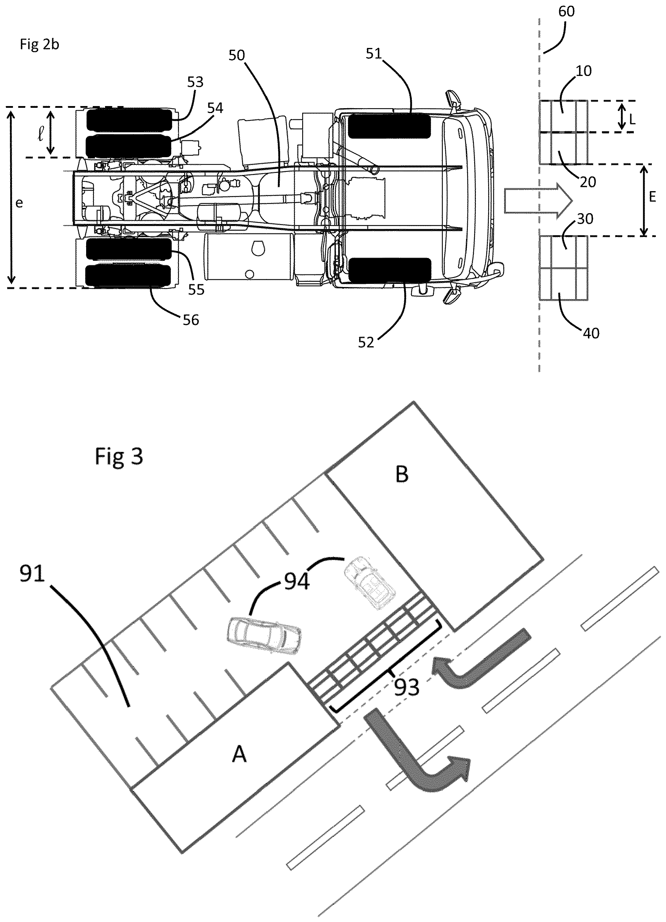

La figure 2b montre un second exemple de réalisation d'un système de mesure de l'état des pneumatiques associant plusieurs modules identiques à celui de la figure 1.

Dans cet exemple, le système de mesure de l'état des pneumatiques est constitué de quatre modules 10, 20, 30 et 40 identiques aux modules 80 et 90 de la figure 2a. Ces modules sont disposés sur le sol le long d'une ligne 60. Ils sont adjacents deux à deux, et forment ainsi deux sous-ensembles.

Dans cet exemple, l'écartement E entre les deux sous-ensembles est avantageusement choisi de sorte que, lorsqu'un véhicule de type poids lourd 50 se présente face au système de mesure de l'état des pneumatiques ainsi constitué, les pneumatiques situés sur le côté gauche du véhicule passent sur le sous ensemble constitué des modules 10 et 20, tandis que les pneumatiques situés sur le côté droit du véhicule passent sur le sous ensemble constitué des modules 30 et 40.

La largeur L des modules peut avantageusement être choisie de sorte que, lorsqu'on crée un sous ensemble de plusieurs modules, la longueur totale dudit sous ensemble soit supérieure à l'encombrement transversal ℓ des pneumatiques jumelés du véhicule poids lourd dont l'état des pneumatiques est évalué. De cette façon, il est possible d'évaluer l'état de tous les pneumatiques du véhicule 50 en un seul passage.

Il est à noter qu'il est possible d'utiliser des modules unitaires dont la largeur L est suffisamment importante pour couvrir la surface nécessaire à la mesure d'état de pneumatiques jumelés, toutefois de tels modules sont bien moins pratiques à transporter et à installer.

Dans cet exemple, il est possible que des pneumatiques du véhicule passent à cheval sur deux modules appartenant au même sous ensemble. Dans ce cas, le pneumatique concerné va être mesuré pour partie par un premier module, et pour partie par un second module, adjacent au premier, ce qui conduira à deux mesures partielles. Dans ce cas, le système doit être muni de moyens de coopérations afin que la mesure de l'état du pneumatique puisse être reconstituée dans son entièreté.

Une première stratégie de reconstitution consiste à réaliser une synchronisation régulière entre chacun des modules et la passerelle 6 décrite dans la figure 1. Pour ce faire, les modules transmettent à intervalle régulier l'horaire indiqué par leur horloge interne à la passerelle 6. Ainsi, l'écart entre les horloges de chacun des modules et l'horloge de la passerelle est connu.

Lorsqu'un pneumatique est mesuré à cheval sur deux modules, chaque module transmet les informations partielles récoltées à la passerelle, accompagnées de l'horaire de la mesure indiqué par l'horloge interne du module.

A la réception des informations, la passerelle ayant mesuré le décalage courant des modules avec sa propre horloge, celle-ci peut recaler temporellement les mesures et détecter ainsi que ces mesures ont été réalisées au même instant.

En outre le système effectue par exemple une lecture d'un identifiant RFID positionné sur le véhicule afin d'identifier le véhicule dont l'état des pneumatiques est mesurés. Ledit véhicule, le nombre et la dimension des pneumatiques qui l'équipent, sont connus dans la base de données distante à laquelle chaque module est relié. Ainsi, lors de la transmission de l'ensemble des informations à la base de données (identifiant véhicule, mesures et horodatage des mesures réalisés par chaque module, horodatage de la réception et de la transmission des données par la passerelle web), il devient possible de détecter que les mesures partielles ont été réalisées sur deux parties distinctes du même pneumatique.

Dans la pratique ce travail de détection des mesures partielles, de reconstruction de mesures complètes pour chaque pneumatique, et de rattachement de l'ensemble des mesures à un véhicule identifié, est pris en charge par un moteur scientifique présent dans le système d'information et connecté à la base de données.

Cette association par recalage temporel peut également être réalisée dans un serveur distant si la passerelle communique les éléments nécessaires audit serveur. Dans ce cas, la passerelle envoie régulièrement son horaire interne associé à l'horaire interne de chacun des modules au serveur. Au moment de la mesure, elle se contente également de faire suivre chaque mesure associée à l'horaire du module concerné et à son horaire propre.

Dans un autre exemple de réalisation, chaque module transmet la mesure réalisée, associée à l'horaire de la mesure, et à l'horaire de la transmission de l'information à la passerelle 6. En supposant que le temps de transmission est nul, la passerelle 6 peut alors recaler temporellement les mesures les unes par rapport aux autres et détecter des mesures réalisées à des instants identiques en utilisant sa propre horloge pour calculer les écarts d'horloge entre des modules au sein du même système de mesure de l'état des pneumatiques.

Une autre solution enfin consiste à équiper chaque module de moyens de communications à très courte distance avec les autres modules adjacents. Dans ce cas, il est possible de réaliser une synchronisation par échange d'informations entre modules adjacents, sans passer par la passerelle 6.

Encore une autre solution consiste à communiquer régulièrement l'état de l'horloge de la passerelle 6 à chacun des modules, afin d'imposer aux modules de suivre l'horaire de la passerelle 6. Cependant, cette solution est moins avantageuse car elle impose aux modules de fonctionner en mode réception, ce qui est moins pertinent du point de vue de la consommation électrique de l'électronique interne des modules.

Une autre façon de reconstituer une mesure de pneumatique entière peut être employée lorsque les pneumatiques contiennent des puces d'identifications par RFID.

Dans ce cas, les modules étant munis chacun d'un lecteur RFID, il est possible d'envoyer les mesures partielles de pneumatique à la passerelle 6, accompagnées de l'identifiant de pneumatique détecté lors de la mesure.

Dans un second temps, la passerelle, ou le serveur distant, peuvent associer les mesures partielles réalisées, en mettant à profit la connaissance des identifiant de pneumatique sur lesquelles ces mesures ont été réalisées.

La figure 3 illustre une autre réalisation de système de mesure de l'état des pneumatiques à partir des modules décrits dans la figure 1.

Dans cet exemple, une ligne de modules 93 est réalisée en associant six modules identiques au module décrit dans la figure 1. Cette ligne est disposée à l'entrée d'un parking 91. Cette entrée du parking 91 est située entre deux bâtiments A et B.

Cette configuration est particulièrement avantageuse car elle permet de mesurer l'état des pneumatiques de tous types de véhicules 94 entrant dans le parking 91, quel que soit le lieu exact de passage des véhicules 94 sur la ligne 93, dans le sens de l'entrée comme dans le sens de la sortie.

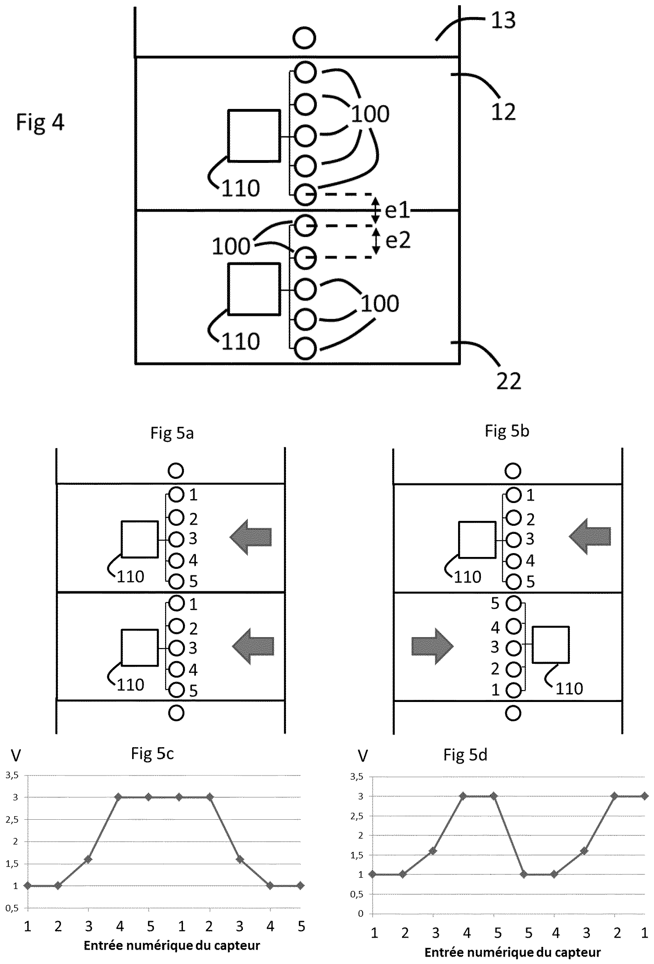

La figure 4 montre le détail de l'intérieur de deux modules situés à une extrémité de la ligne 93 décrite dans la figure 3. Le module 22 est situé contre le bâtiment B. Le module 12 est situé entre deux modules 13 et 22.

Ces modules sont munis de capteur 100 disposés en ligne, régulièrement espacés les uns par rapport aux autres, et reliés à une électronique de mesure et de transmission d'information 110.

Dans le cas des figures 3 et 4, les capteurs 100 utilisent une source de champ magnétique. Ce cas peut exister, par exemple, dans le cas de capteurs de mesure de l'épaisseur de couche de matériau caoutchouteux fonctionnant sur le principe des courants de Foucault ou sur le principe de la reluctance variable.

Ainsi, le champ magnétique émis par chaque capteur peut venir perturber les capteurs qui lui sont adjacents. On parle d'interactions entre capteurs. Les interactions entre capteurs ne sont pas problématiques si elles sont identiques d'un capteur à l'autre. Cette situation d'interactions identiques est acquise dès lors que chaque capteur est situé le long d'une ligne, entre deux groupes de capteurs constitués d'au moins deux capteurs identiques, et que la distance séparant les capteurs soit toujours la même.

Pour que cette condition soit respectée, l'écart e1 entre deux capteurs appartenant respectivement à deux modules adjacents doit être le même que l'écart e2 entre les capteurs situés à l'intérieur d'un même module. Pour ce faire, la distance entre les capteurs 100 situés aux extrémités des modules, et le bord extérieur du boitier des modules doit être égal à e2 / 2. Lorsque cette condition est respectée, et que les modules sont installés de façon parfaitement adjacente, on a e1=e2.

Cette caractéristique est également une condition de bon fonctionnement du système de mesure de l'état des pneumatiques décrits dans la figure 2b.

Par ailleurs, pour qu'un système associant plusieurs modules puisse réaliser des mesures précises, il doit préalablement être étalonné. Cet étalonnage doit tenir compte de l'environnement magnétique de chaque capteur 100 appartenant au système. Pour garantir cela, lorsqu'un module est fabriqué, l'étalonnage est effectué de deux façons différentes. Un premier étalonnage est réalisé sur le module seul. Un second étalonnage est réalisé sur le module positionné entre deux modules adjacents, comme l'est le module 12 de la figure 4. Les coefficients de correction de chaque capteur, obtenus à la suite de ces étalonnages, sont ensuite stockés dans la base de données à laquelle chaque module du système est connecté, via la passerelle 6 décrite dans la figure 1.

Selon le mode de réalisation, les mesures réalisées par chaque capteur de chaque module du système sont corrigées en tenant compte de la présence de modules adjacent ou non dans le système.

Ainsi, dans le cas du module 22, les coefficients de correction utilisés pour corriger les mesures réalisées par les capteurs situés dans la moitié de module la plus proche du bâtiment B, seront les coefficients d'étalonnage obtenus avec un module seule.

En revanche, les coefficients de correction utilisés pour corriger les mesures réalisées par les capteurs situés dans la moitié de module la plus proche du module 12, seront les coefficients d'étalonnage obtenus avec un module positionné entre deux modules adjacents.

Les figures 5a et 5b montrent le détail de deux autres modules situés à l'intérieur de la ligne 93 décrite dans la figure 3.

Sur ce dessin, les capteurs 100 décrits précédemment, sont numérotés de 1 à 5 selon le numéro de l'entrée numérique sur lequel lesdits capteurs 100 sont connectés dans l'électronique de traitement 110.

Ainsi, selon l'orientation des modules les uns par rapport aux autres, il est possible de positionner le capteur relié à l'entrée 5 d'un module à côté du capteur numérotés 1 d'un seconde module adjacent. Cette disposition est représentée dans la figure 5a.

Alternativement, si on tourne l'une des modules à 180° par rapport à le module qui lui est adjacent, il est possible de disposer le capteur relié à l'entrée 5 du premier module à côté d'un autre capteur numéroté 5 et appartenant au second module.

Ainsi, même si il est possible de réaliser la mesure de pneumatique dans le sens de la sortie ou de l'entrée du parking 91 décrit dans la figure 3, il est important de connaitre l'orientation des modules les unes par rapport aux autres, afin d'être capable de de déterminer si des mesures réalisées sur deux modules adjacents sont deux mesures partielles du même pneumatique, ou si il s'agit de mesures issues de pneumatiques distincts.

Les figures 5c et 5d illustrent ce problème. Le graphique de la figure 5c a été obtenu en faisant rouler un pneumatique à cheval sur les deux modules montrés dans la figure 5a. Dans ce graphique, le numéro d'entrée numérique correspondant à chaque capteur est indiqué en abscisse et la tension de sortie de chaque capteur est indiquée en ordonnée.

Si l'orientation des modules enregistrée en base de données était, par erreur, celle de la figure 5b, il en résulterait l'interprétation visible en figure 5d. Dans le cas du graphique de la figure 5d, la présence de deux pics de tension distincts laisserait penser que deux pneumatiques jumelés sont passés sur l'ensemble constitué des deux modules. Cela serait une erreur manifeste.

Afin de résoudre ce problème, on peut par exemple enregistrer dans une base de données distante les orientations relatives des modules les unes par rapport aux autres. Pour ce faire on peut avantageusement réaliser un dessin sur la surface des modules, afin de mettre en évidence l'orientation desdites modules. Par exemple, un dessin semblable à la flèche représentée sur chaque module dans les figures 5a et 5b. Lors de l'installation ce dessin peut ensuite être utilisé afin d'enregistrer en base de données l'orientation de chacun des modules relativement à ses voisins.

Une façon plus simple de procéder consiste à respecter la même orientation pour tous les modules en positionnant toutes les flèches d'un même système de mesure de l'état des pneumatiques dans la même direction. Ce faisant, un capteur relié à l'entrée numérique 5 de l'électronique 110 d'un des modules est toujours positionné à côté d'un capteur relié à l'entrée numérique 1 d'un module adjacent. Ce faisant, l'information à enregistrer en base de données est plus simple puisque la configuration est toujours la même d'un système de mesure de l'état des pneumatiques à l'autre.

Une autre disposition doit être respectée afin d'assurer qu'un système de mesure de l'état des pneumatiques tel que celui décrit dans la figure 3 puisse fonctionner. Il s'agit d'enregistrer la position relative des différents modules les unes par rapport aux autres.

Le système de mesure 93 décrit dans la figure 3 montre en effet six modules disposés au sol les unes contre les autres, sans espace entre chacun des modules. Chaque module dispose d'un identifiant unique qui lui est propre. Par exemple, dans le cas décrit dans la figure 3, les modules sont numérotés entre 1000 et 1006.

Afin d'être capable de reconstituer les mesures de pneumatiques qui passeraient à cheval entre deux modules, mais aussi de détecter automatiquement que des pneumatiques différents appartiennent à un même véhicule, il convient d'enregistrer dans la base de données distante la configuration géométrique exacte des modules, avec leur position et leur identifiant respectif le long de la ligne de mesure décrite par le système 93.

Par exemple, il est possible de répartir les modules en partant du bâtiment A et en rejoignant le bâtiment B en respectant l'ordre numérique suivant : 1000, 1001, 1002, 1003, 1004, 1005, 1006.

Mais il est également possible de répartir les modules selon l'ordre suivant : 1000, 1002, 1004, 1001, 1003, 1006.

Ces deux configurations sont très différentes et conduiraient à des erreurs d'interprétation des mesures si elles n'étaient pas connues dans la base de données distante associée au système 93.

Cette connaissance en base de données de la répartition géométrique des identifiants de modules à l'intérieur d'un système composé de plusieurs modules d'une part, ainsi que de l'orientation relative des modules les unes par rapport aux autres d'autre part, est un impératif pour permettre à de tels systèmes de fonctionner correctement. Les systèmes décrits dans les figures 2a et 2b sont donc concernés par ce besoin au même titre que le système décrit dans la figure 3.

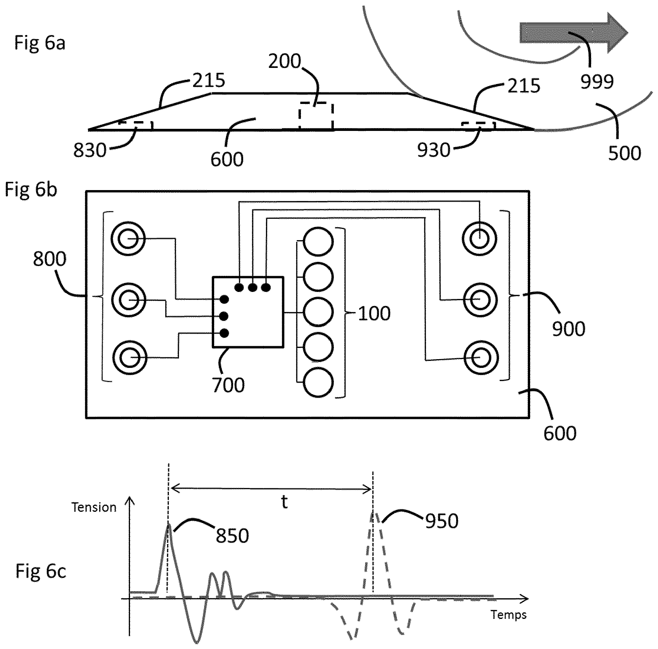

Les figures de la figure 6a et 6b illustrent quelques détails supplémentaires de l'électronique interne d'un module de mesure d'état des pneumatiques. Ce type de module est utilisable par exemple dans le cas du système de mesure d'état des pneumatiques décrit dans la figure 2b.

Ce module 600 est muni de logements 200 pour les capteurs de mesure d'état des pneumatiques 100 et de logements 830 et 930 pour des capteurs 800 et 900 de détection de pneumatique. Dans le cas des figures 6a et 6b, les capteurs de détection de pneumatique sont des buzzers piézoélectriques qui génèrent une tension positive lorsqu'un pneumatique 500 se présente sur le module 600.

Les capteurs de mesure 100 et de détection de pneumatique 800 et 900 sont reliés dans cet exemple à une électronique centrale 700.

Lorsqu'un pneumatique 500 se présente sur le module 600, les buzzers piézoélectriques génèrent un pic de tension au moment du passage du pneumatique. Ainsi, comme illustré dans la figure 6c lors d'un exemple de passage de pneumatique, un premier pic 850 émis par les buzzers 800 est détecté par l'électronique 700, puis après un temps t, un pic 950 est émis par les buzzers 900.

Dans ce cas, le module peut déterminer que le sens de passage du pneumatique est le sens indiqué par la flèche 999, puisque les buzzers 800 ont été sollicité avant les buzzers 900.

L'utilisation d'un module munie d'un tel système de détection du sens de roulage peut permettre, par exemple, dans le cas du système décrit dans la figure 2b de déterminer automatiquement l'orientation relative des modules les unes par rapport aux autres.

En effet, lorsqu'un véhicule passe sur un tel système, l'ensemble des pneumatiques présents sur le véhicule passant sur le système dans le même sens de roulage, il est possible de détecter l'orientation relative des modules les uns par rapport aux autres.

Pour ce faire, l'information du sens de roulage peut-être envoyée dans le serveur distant, avec les mesures d'état des pneumatiques. Cela permet de détecter d'éventuelles incohérences de sens de passage des pneumatiques, vu du système, lors du premier passage de véhicule sur ledit système. Pour ce faire, il suffirait de se comparer à une orientation standard définie initialement dans le serveur.

Une fois l'orientation relatives des modules les uns par rapport aux autres correctement renseignées dans le serveur, il est possible d'utiliser la même procédure pour réaliser une vérification de non évolution du système dans le temps.

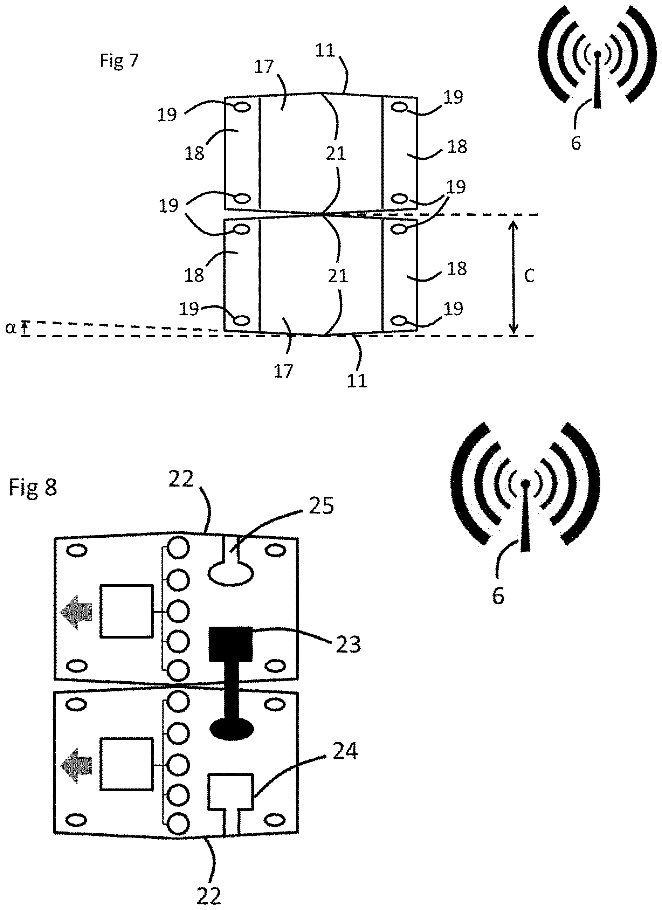

La figure 7 illustre une amélioration de la forme géométrique des modules décrite dans la figure 1. Cette figure 7 montre un système de mesure de l'état des pneumatiques constitué de deux modules 11 identiques.

Chacun des modules 11 a une épaisseur non représentée de l'ordre de quelques centimètres. Par exemple 4 centimètres.

Chacun des modules 11 est constituée de deux rampes d'accès 18 et d'une zone de mesure de l'état des pneumatiques horizontale 17. En outre, les bords latéraux de chacun des modules ne sont pas rectilignes mais, partant d'un point central 21, ils forment un angle α avec la direction de roulage des véhicules.

Ce faisant, les modules adjacents sont en contact par un unique point 21, ce qui facilite l'installation du système sur le sol en évitant de réaliser un assemblage hyperstatique entre les deux modules adjacents, tout en garantissant que la distance entre les capteurs 100, visibles dans les figures 4, 5a et 5b, et présents dans la même configuration à l'intérieur de ces deux modules 11 soient séparés d'une distance constante à l'intérieur des modules et à l'interface entre les deux modules 11 de la figure 7.

En outre, comme il n'est pas toujours aisé de positionner des modules sur le sol au moyen de vis, des trous oblong 19, ont été aménagés dans les rampes d'accès 18 de chacun des modules 11. Ce faisant, si les trous de fixation dans le sol ne sont pas correctement placés, par rapport à la géométrie des modules, il reste possible de déplacer légèrement les deux modules l'une vers l'autre, afin de garantir le contact entre les deux points 21.

Plus largement, il est possible d'imaginer de multiples améliorations mécaniques visant à garantir le bon positionnement de plusieurs modules associées dans le même système de mesure de l'état des pneumatiques.

Par exemple, on peut positionner un rail sur le sol, sur et/ou contre lequel les modules viennent se positionner. Ce faisant, la disposition rectiligne du système ainsi constitué est garanti et le bon positionnement relatif des capteurs 100 décrits précédemment d'un module à l'autre est plus aisé.

On peut également imaginer de rapporter sur les modules, des éclisses permettant de lier les modules entre eux, en verrouillant les positions relatives des modules les uns par rapport aux autres, avant de les fixer sur le sol. Ces éclisses peuvent également avoir des extrémités de formes géométriques différentes et venir s'emboiter dans les modules dans des logements adaptés. Ce faisant, ce montage garanti non seulement le bon positionnement des capteurs 100 les uns par rapport aux autres, mais également l'orientation relatives des modules les uns par rapport aux autres. Cette dernière disposition est illustrée dans la figure 8 qui montre deux modules 22 identiques en vue du dessous montés l'un contre l'autre au moyen d'une éclisse 23 dont la forme géométrique à ces extrémités diffère. Cette éclisse 23 se positionne dans des logements 25 et 24 de forme adaptée, afin de garantir le positionnement et l'orientation relative des modules les uns par rapport aux autres.

## Revendications

1. Système d'évaluation de l'état d'un pneumatique, le système comprenant au moins un premier et un second modules unitaires (10 ,20, 30, 40, 80, 90) d'évaluation de l'état d'un pneumatique,
chaque module unitaire comprenant un boîtier posé au sol, ce boitier contenant au moins un dispositif de détection (100) permettant l'évaluation d'un paramètre du pneumatique lors d'un passage du pneumatique sur ledit boitier et des moyens de transmission de données, ledit système comprenant en outre une base de données distante et une passerelle (6) de transmission de données entre les modules unitaires et la base de données, ledit système **étant caractérisé en ce qu'**il comprend des moyens de coopération entre le premier et second module unitaires.

2. Système d'évaluation selon la revendication 1, dans lequel les premier et second modules unitaires (10, 20) sont positionnés de manière adjacente.

3. Système d'évaluation selon la revendication 1 ou 2, dans lequel les moyens de coopération comprennent des moyens de synchronisation des horloges internes des modules unitaires.

4. Système d'évaluation selon la revendication 1 ou 2, dans lequel les moyens de coopération comprennent des moyens de recalage temporel.

5. Système d'évaluation selon l'une des revendications précédentes, dans lequel chaque module unitaire comprend un lecteur de puce RFID.

6. Système d'évaluation selon l'une des revendications précédentes dans lequel chaque module unitaire comprend au moins un capteur (100) mettant en oeuvre une source de champ magnétique.

7. Système d'évaluation selon la revendication 6 dans lequel les modules unitaires (12, 22) et les capteurs sont positionnés de façon telle que la distance entre deux capteurs adjacents est constante, quel que soit le module unitaire dans lequel le capteur est installé.

8. Système d'évaluation selon l'une des revendications précédentes dans lequel la base de données distante contient des informations représentative du positionnement des modules unitaires les uns par rapport aux autres.

9. Système d'évaluation selon l'une des revendications précédentes, dans lequel les moyens de coopération comprennent des moyens de coopération mécaniques.

10. Système d'évaluation selon l'une des revendications précédentes, dans lequel les moyens de coopération comprennent des moyens de reconstruction de mesure complète à partir de mesures partielles effectuées sur un même pneumatique.

## Patentansprüche

1. System zur Bewertung des Zustands eines Luftreifens, wobei das System mindestens ein erstes und ein zweites Einzelmodul (10, 20, 30, 40, 80, 90) zur Bewertung des Zustands eines Luftreifens enthält,
wobei jedes Einzelmodul ein am Boden befindliches Gehäuse enthält, wobei dieses Gehäuse mindestens eine Erfassungsvorrichtung (100), die die Bewertung eines Parameters des Luftreifens bei einem Übergang des Luftreifens über das Gehäuse ermöglicht, und Datenübertragungseinrichtungen enthält,
wobei das System außerdem eine ferne Datenbank und ein Gateway (6) zur Übertragung von Daten zwischen den Einzelmodulen und der Datenbank enthält, wobei das System **dadurch gekennzeichnet ist, dass** es Einrichtungen zur Zusammenwirkung zwischen dem ersten und dem zweiten Einzelmodul enthält.

2. Bewertungssystem nach Anspruch 1, wobei die ersten und zweiten Einzelmodule (10, 20) einander benachbart positioniert sind.

3. Bewertungssystem nach Anspruch 1 oder 2, wobei die Zusammenwirkungseinrichtungen Einrichtungen zur Synchronisation der inneren Taktgeber der Einzelmodule enthalten.

4. Bewertungssystem nach Anspruch 1 oder 2, wobei die Zusammenwirkungseinrichtungen Einrichtungen zur zeitlichen Rückstellung enthalten.

5. Bewertungssystem nach einem der vorhergehenden Ansprüche, wobei jedes Einzelmodul ein RFID-Chiplesegerät enthält.

6. Bewertungssystem nach einem der vorhergehenden Ansprüche, wobei jedes Einzelmodul mindestens einen Sensor (100) enthält, der eine Magnetfeldquelle verwendet.

7. Bewertungssystem nach Anspruch 6, wobei die Einzelmodule (12, 22) und die Sensoren so positioniert sind, dass der Abstand zwischen zwei benachbarten Sensoren konstant ist, unabhängig von dem Einzelmodul, in das der Sensor eingebaut ist.

8. Bewertungssystem nach einem der vorhergehenden Ansprüche, wobei die ferne Datenbank Informationen enthält, die für die Positionierung der Einzelmodule zueinander repräsentativ sind.

9. Bewertungssystem nach einem der vorhergehenden Ansprüche, wobei die Zusammenwirkungseinrichtungen mechanische Zusammenwirkungseinrichtungen enthalten.

10. Bewertungssystem nach einem der vorhergehenden Ansprüche, wobei die Zusammenwirkungseinrichtungen Einrichtungen zur Rekonstruktion einer vollständigen Messung ausgehend von Teilmessungen enthalten, die an demselben Luftreifen ausgeführt werden.

## Claims

1. System for assessing the condition of a tyre, the system comprising at least a first and a second individual module (10, 20, 30, 40, 80, 90) for assessing the condition of a tyre,
each individual module comprising a housing placed on the ground, this housing containing at least one detection device (100) allowing a parameter of the tyre to be assessed as the tyre passes over the said housing, and data transmission means,
the said system further comprising a remote database and a data transmission gateway (6) for the transmission of data between the individual modules and the database, and
being **characterised in that** it comprises means of collaboration between the first and second individual modules.

2. Assessment system according to Claim 1, in which the first and second individual modules (10, 20) are positioned adjacent to each other.

3. Assessment system according to Claim 1 or 2, in which the means of collaboration comprise means of synchronizing the internal clocks of the individual modules.

4. Assessment system according to Claim 1 or 2, in which the means of collaboration comprise time-adjustment means.

5. Assessment system according to one of the preceding claims, in which each individual module comprises an RFID chip reader.

6. Assessment system according to one of the preceding claims, in which each individual module comprises at least one sensor (100) using a magnetic field source.

7. Assessment system according to Claim 6, in which the individual modules (12, 22) and the sensors are positioned in such a way that the distance between two adjacent sensors is constant, whatever the individual module in which the sensor is installed.

8. Assessment system according to one of the preceding claims, in which the remote database contains information indicative of the positioning of the individual modules relative to one another.

9. Assessment system according to one of the preceding claims, in which the means of collaboration comprise mechanical means of collaboration.

10. Assessment system according to one of the preceding claims, in which the means of collaboration comprise means of reconstructing complete measurements from partial measurements taken on the one same tyre.
